**Europäisches Patentamt**

**European Patent Office**

**Office européen des brevets**

(19)

(11) Publication number : **0 344 890 B1**

# EUROPEAN PATENT SPECIFICATION

(12)

(45) Date of publication of patent specification :
**30.09.92 Bulletin 92/40**

(51) Int. Cl.⁵ : **B29C 47/32, // B29K21:00**

(21) Application number : **89303096.5**

(22) Date of filing : **29.03.89**

(54) **Extrusion device incorporating rotating roller.**

(30) Priority : **30.03.88 JP 74458/88**

(43) Date of publication of application :
**06.12.89 Bulletin 89/49**

(45) Publication of the grant of the patent :
**30.09.92 Bulletin 92/40**

(84) Designated Contracting States :
**DE ES FR GB IT**

(56) References cited :
**EP-A- 0 174 260**
**US-A- 3 142 091**
**US-A- 4 744 745**

(73) Proprietor : **Bridgestone Corporation**
**1-1, Kyobashi 1-Chome Chuo-Ku**
**Tokyo 104 (JP)**

(72) Inventor : **Harada, Jumei Bridgestone Corp.**
**Technical Center**
**3-1-1, Ogawahigashi-cho**
**Kodaira-shi Tokyo (JP)**
Inventor : **Sorioka, Michitoshi Bridgestone**
**Corp. Tech. Center**
**3-1-1, Ogawahigashi-cho**
**Kodaira-shi Tokyo (JP)**

(74) Representative : **Silverman, Warren et al**
**HASELTINE LAKE & CO. Hazlitt House 28**
**Southampton Buildings Chancery Lane**
**London WC2A 1AT (GB)**

## Description

This invention relates to a rotary roller extruder, as defined in the preamble of claim 1 which performs shaping of material to be extruded such as raw rubber or the like by forcing the material to be extruded through a mouth piece by means of an extrusion roller.

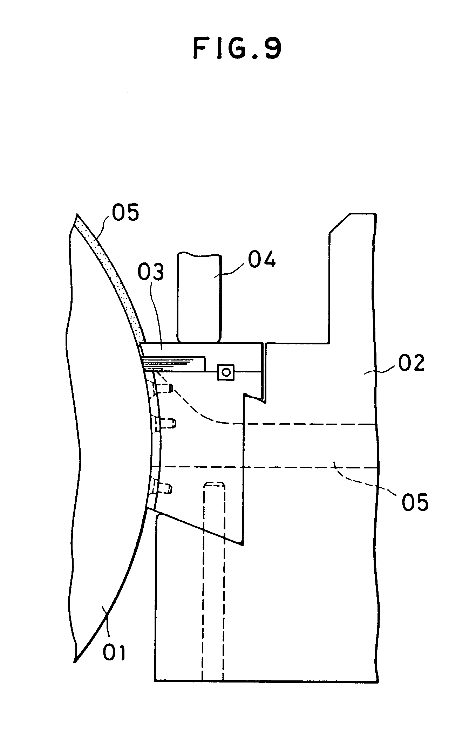

Various kinds of extrusion devices incorporating rotary rollers have been heretofore proposed, and one example of these (Laid-Open Japanese Utility Model Specification No.63-13718 (1988)) is illustrated in Figure 9 of the accompanying drawings and will be explained in the following.

In Figure 9, reference numeral 01 designates an extrusion roller. A die head 02 having a flow passageway formed therein towards the circumferential surface of the roller is provided in association with the extrusion roller 01, and a mouth piece 03 is fixed to the downstream side end edge of the die head 02 and pressed by a mouth piece press member 04.

Material 05 to be extruded fed under pressure along the flow passageway of the die head 02 comes into contact with the circumferential surface of the extrusion roller 01, and it is fed out upwards from the gap therebetween as a result of rotation of the extrusion roller 01.

At this time, the material to be extruded 05 is shaped as a result of its passing through the mouth piece 03 which has a shape selected according to the desired profile of extrudate.

Other examples of the known rotary extruders in the prior art such as described in US-A-4,744,745 and EP-A3-01 74 260, have a similar structure.

As described above, the rotary extruders of the prior art had such structure that when the mouth piece is to be exchanged, the mouth piece press member is released and the mouth piece is removed in nearly the tangential direction with respect to the circumferential surface of the roller (in the upper direction as viewed in Figure 9), and therefore, quick exchange of the mouth piece was difficult.

In addition, the structure was not suitable for performing automatic exchange of the mouth piece, it was difficult to realize automatic exchange, and no construction with any automatic exchange capability has been proposed.

Furthermore, when the mouth piece has been removed, there is nothing to restrain extrusion of the material to be extruded. Hence, if extrusion is continued in such a situation, a large amount of material to be extruded will be extruded wastefully, and if yet more time is spent exchanging the mouth piece, then the amount of the material to be extruded which is wasted would be increased correspondingly.

Accordingly, it is a common practice to interrupt the extrusion work upon exchange of the mouth piece, and, as a result of the interruption in the extrusion work, normally a break in the flow of the material to be extruded will occur.

In other words, unless changeover of the mouth pieces is performed after the material to be extruded has been cut, it is difficult to mount a new mouth piece, and if a new mouth piece is mounted while continuation of extrusion takes place, it must be mounted in such manner that the material to be extruded which has swelled out in the direction of flow may be compressed in the tangential direction with respect to the circumferential surface of the roller. Hence the mounting is difficult, and also in many cases the material to be extruded would be cut after all by the rotation of the extrusion roller 01 during the change-over work.

For the above-mentioned reasons, the material to be extruded is already cut in prior practice on exchange of the mouth piece, and accordingly, when extrusion is subsequently carried out, the lead end of the material subsequently to be extruded must be guided, and this necessitates intervention by the machine operator.

In addition, once the material to be extruded has been cut, there is considerable contraction of the end portion of the material to be extruded and hence the shape of the extruded material cannot be maintained in a predetermined configuration. A certain time must elapse before an extruded material having good quality and precision of shape can be formed continuously.

It is an object of the invention to avoid the shortcomings of known extruders and to avoid the working efficiency being lowered by the need for the material to be extruded to be cut upon exchange of the mouth piece, and thus to avoid the need for intervention by an operator.

According to this invention, there is provided a rotary roll extruder comprising mouth piece moving means for moving a mouth piece along a path in a radial direction of an extrusion roller to make the mouth piece move towards and away from the circumferential surface of said extrusion roller, and a mouth piece positioning means for placing said mouth piece in a position where said mouth piece is closely adjacent the circumferential surface of said extrusion roller to define an extrusion gap, characterised by the additional provision of mouth piece exchanging means for performing exchange of mouth pieces at a position where said mouth piece is held apart from said extrusion roller without requiring cutting of the material being extruded, said mouth piece exchanging means being positioned on said path, and of mouth piece stocking means for preliminarily stocking various kinds of mouth pieces for movement along said path.

The concept of a movable mouth piece, and hence the definition forming the present claim preamble, is known from US-A-4,744,745. This movement does not play any part in achieving replacement of mouth pieces without requiring cutting of material being extruded. It simply enables an extrusion opening of variable sectional area to be provided.

Thus, when using the extruder of the present invention, shaping of material to be extruded is performed with the appropriate mouth piece brought close to the circumferential surface of the extrusion roller by the mouth piece moving means and with positioning of the mouth piece having been effected by the mouth piece positioning means. Upon exchange of the mouth piece, the mouth piece is separated from the extrusion roller by the mouth piece moving means and is replaced by another mouth piece stocked in the mouth piece stocking means by the mouth piece exchanging means. Thereafter, the new mouth piece is made to approach to the circumferential surface of the extrusion roller by the mouth piece moving means and is positioned by the mouth piece positioning means.

The mouth piece replacement work can be executed entirely automatically without relying upon direct human intervention.

since the mouth piece is moved in the radial direction of the extrusion roller by the mouth piece moving means to approach and then separate from the circumferential surface of the extrusion roller, it is possible to simplify the mechanism and to reduce the working time. During exchange of the mouth pieces, the extrusion work can even be continued and it is unnecessary to cut the flow of material being extruded.

Accordingly, the working efficiency of the rotary extruder can be enhanced, and manual operation such as guiding of the material to be extruded by operators, can be avoided.

For a better understanding of the invention and to show how the same can be carried into effect, reference will now be made, by way of example only, to the accompanying in drawings wherein:

FIGURE 1 is a general perspective view of a rotary extruder according to one embodiment of the present invention;

FIGURE 2 is a vertical longitudinal cross-section through a mouth piece exchanger in the rotary extruder shown in Figure 1;

FIGURE 3 is a plan view partly cut away of the same mouth piece exchanger;

FIGURE 4 is a perspective view of a part of a mouth piece stocker showing mouth pieces therein;

FIGURE 5 is an exploded perspective view of an essential part of a mouth piece exchanger;

FIGURE 6 is an exploded perspective view of a mouth piece holder;

FIGURE 7 is a cross-section side view of part of the extruder with a mouth piece mounted at a predetermined position;

FIGURE 8 shows schematically, in vertical cross-section, a mouth piece exchanger according to another embodiment of the present invention;

and

FIGURE 9 is as already noted, a cross-section through part of a prior art rotary extruder.

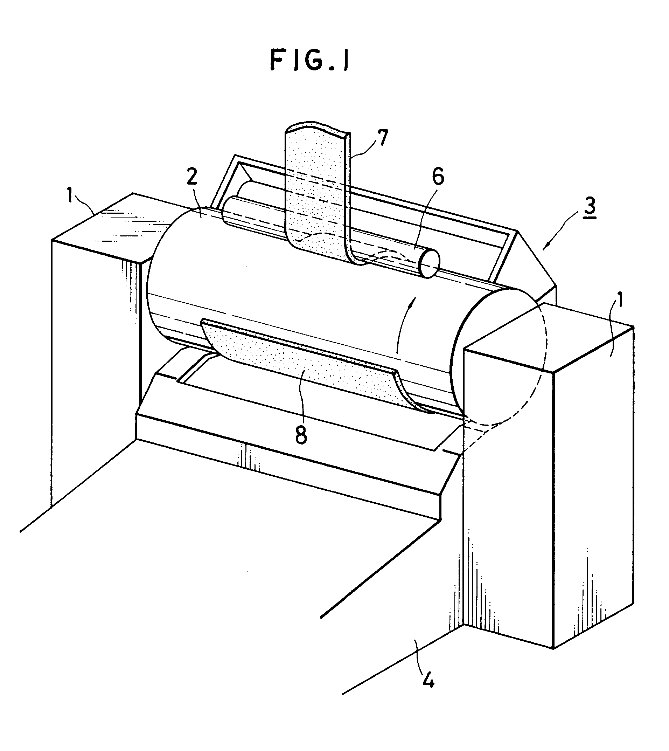

A preferred embodiment of the present invention illustrated in Figures 1 to 7, will first be described.

In the general perspective view of a rotary extruder shown in Figure 1, an extrusion roller 2 is rotatably supported by left and right support members 1, and a chamber-defining block 3, hereinafter termed simply "chamber block", is disposed behind the extrusion roller 2.

Below the extrusion roller 2 is disposed a mouth piece exchanger 4. Although not visible in Figure 1, a mouth piece 5 is disposed close to the bottom circumferential surface of the extrusion roller. As can be seen, raw rubber strip 7 is drawn over the circumferential surface of the extrusion roller 2 via a guide roller 6 disposed above, as a result of rotation in the direction of an arrow of the extrusion roller 2, and is fed to an opening of the chamber block 3. The raw rubber strip 7 fed into the chamber block 3 accumulates in the chamber defined by chamber block 3 to pass therefrom through the mouth piece 5 to undergo extrusion as rotation of the extrusion roller 2 draws extrudate from the mouth piece 5. Hence a shaped raw rubber sheet 8 is formed.

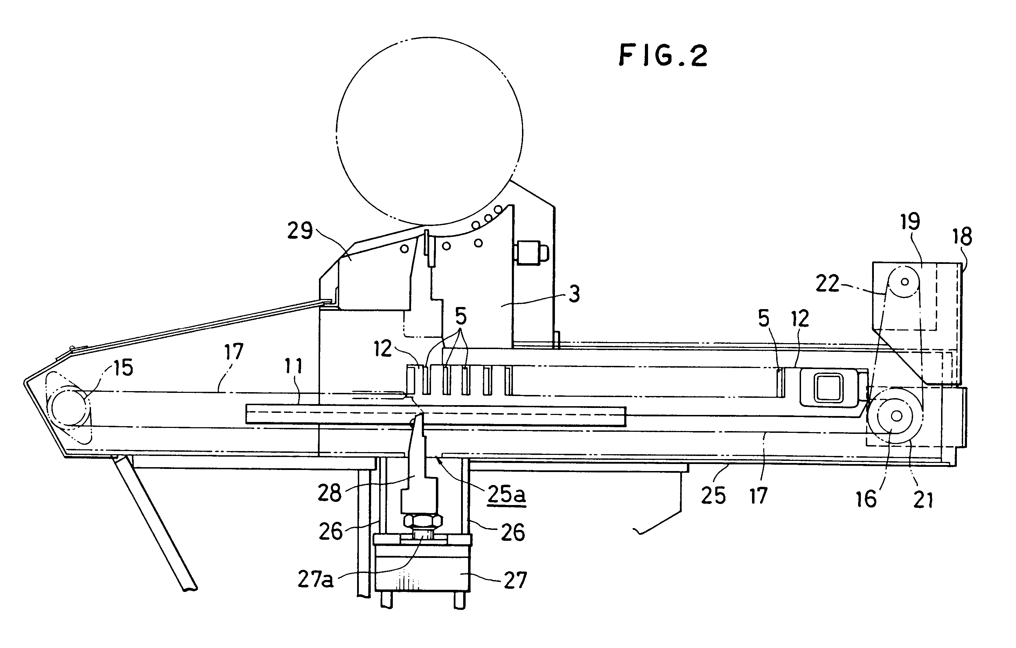

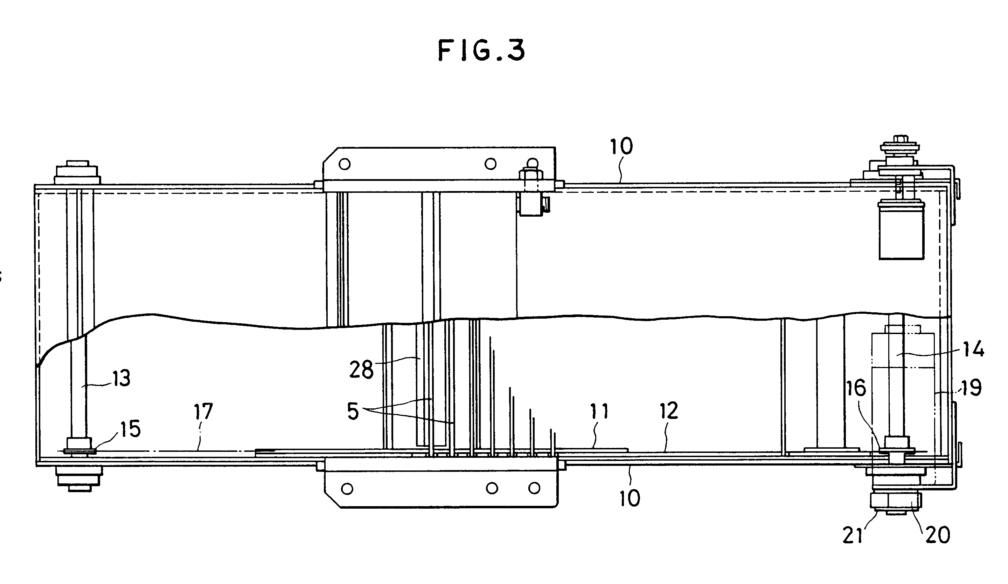

The structure of the mouth piece exchanger 4 positioned below the extrusion roller 2 will now be described with reference to Figures 2 and 3.

For providing a stock of replaceable mouth pieces 5 for use when required, guide plates 11 which extend backwards and forwards of the extrusion roller 2 (in the left and right directions as viewed in Figures 2 and 3) and have arts of their upper edge portions and corresponding side plates cut away and fixed to the inside surfaces of left and right side plates 10 of the mouth piece exchanger 4. Planar elongated mouth piece stockers 12 are provided in pairs on the left and right sides as fitted in the cut-away spaces, and these mouth piece stockers 12 are slidable in the back and forth directions as guided by the guide plates 11 and the side plates 10.

The mouth piece stockers 12 have a plurality of slots extending downwards from their upper edges, which slots are spaced at predetermined intervals. various kinds of mouth pieces 5 may be stocked with their opposite end portions supported between the corresponding slots of the left and right mouth piece stockers 12.

Shafts 13 and 14 are pivotally supported at the front end portion and the rear end portion of the mouth piece exchanger 4, which shafts are directed horizontally transversely of the stocker. Secured at positions on the left and right hand ends of the shafts 13 and 14, close to the respective side plates 10 are sprockets 15 and 16.

Chains 17 extend between the corresponding front and rear sprockets 15 and 16, being fitted to the shafts 13 and 14, respectively. A chain 17 is wound around each sprocket 15 and 16 over half its circumference from its bottom to its top and the opposite ends of the chain 17 are fixedly secured to the above-described mouth piece stocker 12.

Above the rear shaft 14 is provided a motor 19 supported by a supporting member 18. A sprocket 20 is fitted to a drive shaft of the motor 19 projecting laterally therefrom, and a chain 22 extends between this sprocket 20 and another sprocket 21 which is fitted to an end portion of the above-described shaft 14 projecting from the side plate 10.

Accordingly, when the motor 19 is driven, rotation of its shaft is transmitted via the chain 22 to the shaft 14 and this can make the mouth piece stockers 12 slide back and forth along the guide plates 11 via the intermediary of the chains 17.

The left and right mouth piece stockers 12 are always held at symmetric positions, and they can move simultaneously in the same direction holding the mouth pieces 5.

A rectangular aperture 25a that is elongated in the left and right directions, is positioned in a bottom plate 25 of the mouth piece exchanger 4 below the extrusion roller 2. An air cylinder 27 is fixedly supported by a support frame 26 extending downwards from this rectangular aperture 25a, and a mouth piece holder 28 is fixedly secured to the top end of a cylinder rod 27a that can project upwardly from the air cylinder 27.

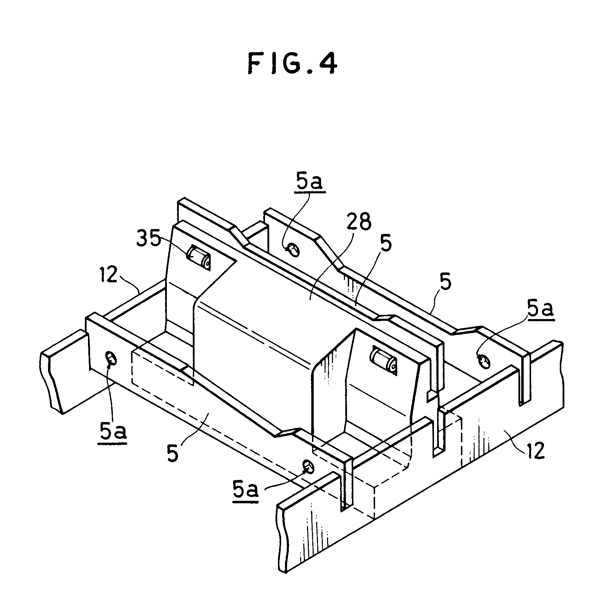

A mouth piece holder 28 extends upwardly across the width of the mouth piece exchanger. Its length is somewhat shorter than the distance between the above-described left and right guide plates 11, and so, the mouth piece holder 28 can pass vertically through the space between the guide plates 11 when driven by the air cylinder 27 (see Figure 4).

Behind the displacement upper limit of the mouth piece holder 28 is disposed the above-described chamber block 3. In front of the mouth piece holder 28 and to right thereof are a pair of taper blocks 29. The mouth piece holder 28 is adapted to be fitted between the chamber block 3 and the taper blocks 29 when it rises from below.

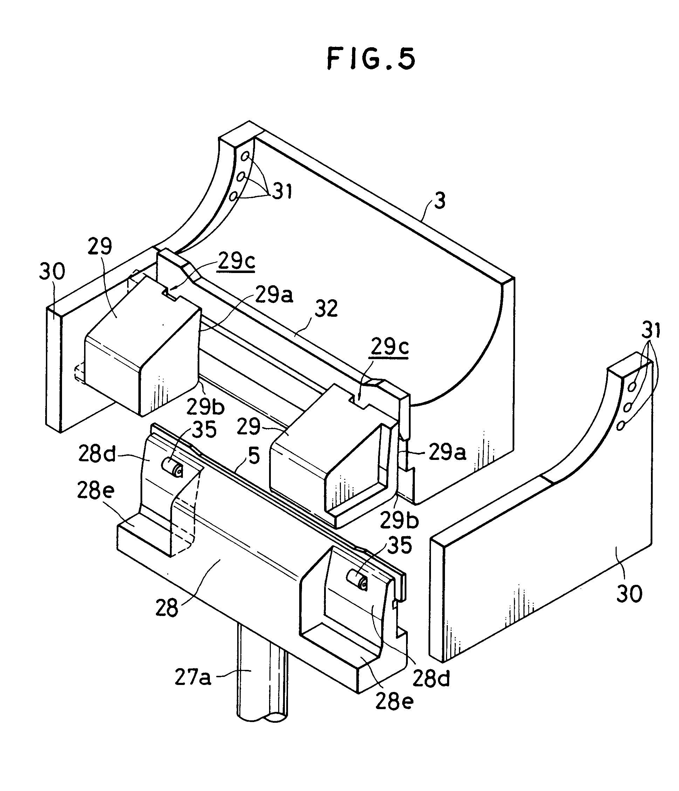

The structure of the chamber block 3, the taper blocks 29 and associated parts will now be explained in greater detail with reference to Figures 5 to 7.

As shown generally in Figure 5, the chamber block 3 is so shaped that it includes a portion of generally rectangular parallelepipedic shape whose upper front edge has been removed in a shape which is that of a circular arc shape in cross-section. A portion including its lower front edge has been also cut away in the shape which is that of a rectangle in cross-section. Each of a pair of side plates 30 is matched to the left and right side surfaces respectively of the chamber block 3 and is to be secured thereto.

The side plates 30 each have arcuate edges of a shape somewhat similar to the circular arc shape present in the chamber block 3. The arcuate edge of each side plate 30 projects upwardly from the arcuate surface of the chamber block 3 when the side plate 30 has been attached to the chamber block 3. Three circular holes 31 are drilled in the upwardly projected portions of the side plates 30 and adjacent the circular arc-shaped edges, and windows 31 made of transparent glass are fitted in the respective circular holes.

These transparent windows 31 are used for visually detecting a banked amount of the fed raw rubber strip 7.

A back plate 32 is attached to the front side surface of the chamber block 3. The upper edge of the back plate 32 is cut away in the general shape of the mouth pieces and projects upwards from the circular arc-shaped portion of the chamber block 3. A chamber for temporarily accommodating raw rubber 7 is formed by the chamber block 3 which provides a bottom wall and a rear wall for this chamber, the side plates 30 serving as side walls and the back plate 32 serving as a front wall. The extrusion roller 2 is fitted from above into such chamber while maintaining a predetermined interval with respect the arcuate surface of the chamber block 3.

The left and right side plates 30 extend forwardly from the chamber block 3, and the above-described taper blocks 29 are fixedly secured to the inner surfaces of the extended side plate portions.

Each taper block 29 forms an approximately cubic body. The lower half of the rear side surface of each taper block 29 is opposed to the back plate 32 in a vertical plane. The upper half of the rear side surface of each taper block 29 forms a surface 29a inclined in the obliquely backward direction, and a notch 29c of rectangular cross-section extends in the vertical direction in the same upper portion.

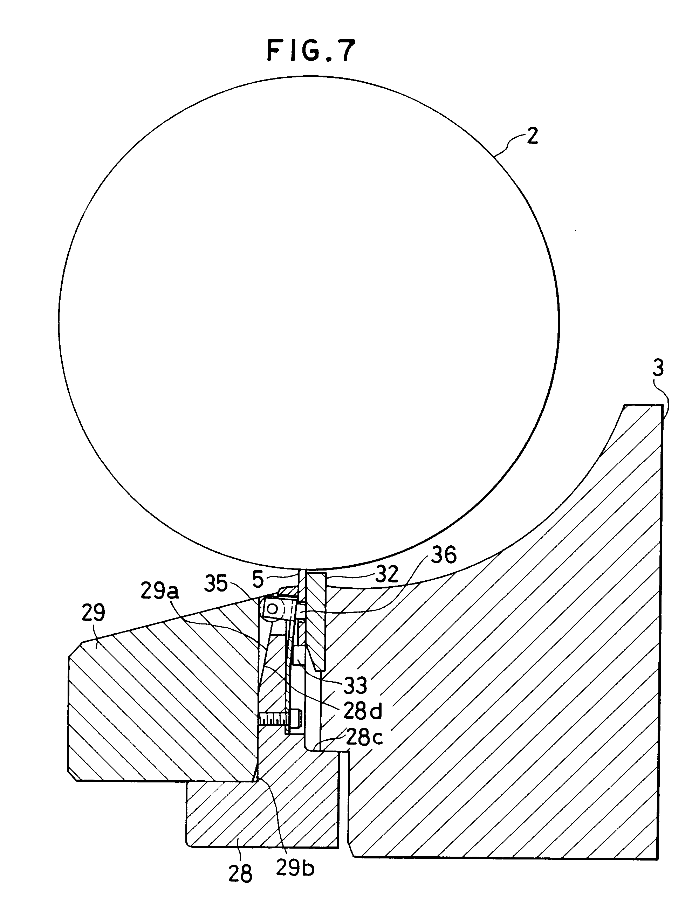

In addition, at the bottom edge of the rear side surface of each taper block 29 is also formed a small inclined surface 29b (see Figure 7).

At the outer surface of each taper block 29 and coming into contact with a side plate 30 is formed a protrusion extending along the rear side surface and the bottom surface of the taper block. This protrusion fits in a cut-away portion of the same shape provided at a predetermined position on the side plate 30, and hence ensures that the taper block 29 is fixedly secured to the side late 30.

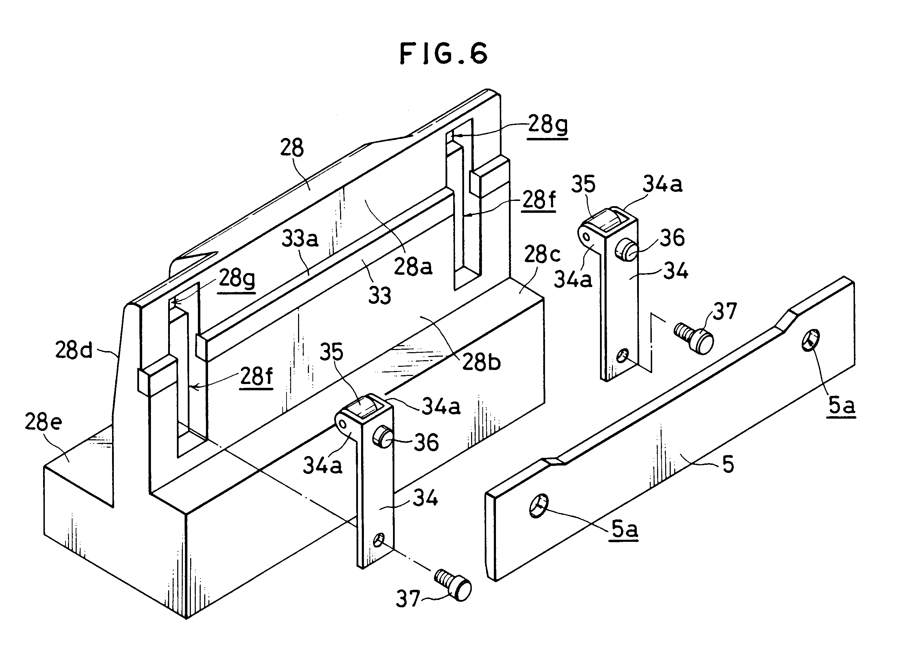

The above-described mouth piece holder 28 has a configuration such that it can be fitted from below into a space formed between the aforementioned back plate 32 and the taper block 29. As shown in Figure 6, the rear surface of the back plate 32 is cut away in steps to provide a horizontal surface 33a at a middle level, the surface 33a extending backwards by a distance corresponding to the thickness of the mouth piece 5 from the upper vertical surface 28a and being produced by fitting a rectangular rod shaped magnet i.e. rod 33 to surface 28a. A horizontal surface 28c at a lower level than a projection of vertical surface 28b projects further backwards below surface 33a.

In addition, the front surface of the mouth piece holder 28 has its left and right hand marginal regions cut away so as to conform nearly to the shape of the above-described taper blocks 29, leaving its central portion projecting forwardly.

On the front surface of each cut-away portion of the front surface of the mouth piece holder is formed an inclined surface 28d conformed to an inclined surface 29a formed on the rear surface of the taper blocks 29 in the upper portion of the front surface thereof. In its lower portion this surface is vertical. Bottom surface 28e of each cut-away portion is almost horizontal.

Finally, in Figure 6, vertical elongate channels 28f are formed in the rear vertical surface 28a and 28b of the mouth piece holder 28, in adjacent left and right hand margins thereof, to leave rectangular openings 28g extending between these long grooves 28f and the cut-away portions on the front surface of mouth piece holder 28.

Into these elongate channels 28f are fitted elongated leaf springs 34, on each of which bearing portions 34a are formed by bending forward left and right side projections of their top ends. A roller 35 is rotatably mounted via a pivot between bearing portions 34a of each leaf spring 34. Also, a protruding portion 36 is provided on the rear surface of the leaf spring 34 at a position behind the roller 35.

When such a leaf spring 34 is fitted in an elongate channel 28f in the mouth piece holder 28 and the bottom end portion of the leaf spring 34 is secured to the mouth piece holder 28 by means of a screw 37, the roller 35 provided at the front of the top end of the leaf spring 34 passes through the rectangular opening 28g, most of the roller 35 is projected forwards from the inclined front surface 28d of the cut-away portion of the mouth piece holder 28, and a protruding portion 36 lies in the elongate channel.

The mouth piece 5 is supported in such a manner that it is held in contact with the upper vertical surface 28a of the mouth piece holder 28 having the above-mentioned structure, being positioned on the horizontal surface 33a of the magnet rod 33, the bottom surface of the mouth piece 5 is attracted by the magnet i.e. rod 33, and when the mouth piece 5 is held in contact with the upper vertical surface 28a, the rear side of the mouth piece 5 is almost flush with the vertical surface 28b.

Circular holes 5a are drilled in the mouth piece at the positions opposed to the protruding portion 36 on the leaf springs 34 when the above-mentioned situation obtains.

The mouth piece 5 has its upper edge cut away in a predetermined shape, and when it is supported by the mouth piece holder 28, the upper edge projects above the mouth piece holder 28, and as described previously, its opposite edge portions also project to the left and to the right, respectively, of the mouth piece holder 28.

The mouth piece exchanger 4 according to this preferred embodiment of the invention and constructed in the above-described manner, operates as follows.

At first, when the mouth piece holder 28 is positioned at its lowermost position, the tip of the mouth piece holder 28 is lower than the mouth pieces 5 stocked in the mouth piece stockers 12 as shown in Figure 2, and under such condition, when the motor 19 is driven, the mouth piece stockers 12 will slide backwards or forwards so that a desired mouth piece 5 may come to the position above the mouth piece holder 28.

Then, if the mouth piece holder 28 is raised by driving the air cylinder 27, the desired mouth piece 5 is supported by being attracted to the horizontal plane of the magnetic rod 33 fitted in the mouth piece holder 28, and the mouth piece holder 28 supporting the mouth piece 5 will pass through the space between the mouth piece stockers 12 (see Figure 4), and rise further. Thus the mouth piece holder 28 enters the space between the taper block 29 and the upper part of the back plate 32.

During this process, the rollers 35 at first project forward from the inclined surface 28d and strike against the inclined surfaces 29b at the bottom of the rear side surfaces of the taper blocks 29. The rollers 35 are then retracted backwards while rolling along the inclined surfaces 29b and 29a of the taper blocks 29 as a result of which the leaf springs 34 are bent backwards. The protruding portions 36 provided on the rear surfaces of the leaf springs 34 will then move backwards to enter the circular holes 5a in the mouth piece 5, and thereby prevent the mouth piece 5 from travelling upwardly. If the mouth piece holder 28 were to rise further, the rear surface of the mouth piece 5 would adjoin the front surface of the back plate 32, and if it were to rise still further, the inclined surface 28d of the mouth piece holder 28 would come into contact with the inclined surfaces 29a of the taper blocks 29, and then a wedge action is generated between the respective members, so that the top portion of the mouth piece holder 28 would strongly press the mouth piece 5 backed by the back plate 32, and would hold the mouth piece 5.

The rising of the mouth piece holder 28 is, in fact, stopped at the moment when the horizontal surface 28c of the mouth piece holder 28 has struck against the upper wall of the lower cut-out portion of the chamber block 3, and thus positioning of the mouth piece 5 is effected.

Figure 7 shows the mouth piece holder 28 properly fitted in the space between the taper blocks 29 and the back plate 32. The left and right upper edge portions of the mouth piece 5 are held in contact with the circumferential surface of the extruding roller 2, and the mouth piece 5 can be firmly fixed.

Extrusion work is now carried out according to the shape of mouth piece 5 and a raw rubber sheet 8 shaped into a predetermined form is produced.

When the mouth piece 5 is to be exchanged, at first the air cylinder 27 is driven to lower the mouth piece holder 28. Since the mouth piece 5 is prevented by the protruding portion 36 from being withdrawn, it is lowered together with the mouth piece holder 28 and is released from engagement with the back plate 32 and the top portion of the mouth piece holder 28, and when the rollers 35 pass through the inclined surfaces 29b of the taper blocks 29 and are projected forwards by the restoring forces of the leaf springs 34, the protruding portions 36 which have been fitted in the circular holes 5a in the mouth piece 5 are disengaged from the circular holes 5a, and the mouth piece 5 is only held by the attractive force of the magnet rod 33.

When the mouth piece holder 28 descends further, the slots of the mouth piece stockers 12 in which this particular mouth piece 5 was stocked previously are positioned under the mouth piece holder 28, which slots are now unoccupied owing to that mouth piece 5 having been removed. Hence this particular mouth piece 5 is accommodated in the predetermined slots of the mouth piece stockers 12 with the opposite ends of the mouth piece 5 supported by the same slots. The mouth piece holder 28 which has been holding the mouth piece 5 which has now been removed from it will now descend further and stop.

Subsequently, the motor 19 is driven so that the mouth piece stockers 12 are made to slide and a newly selected mouth piece 5 is able to be positioned above the mouth piece holder 28. The mouth piece holder 28 then rises and is fitted in the space between the taper blocks 29 and the back plate 32 while holding the new mouth piece 5 as described previously, and when the new mouth piece 5 has been placed at the predetermined position, replacement of the mouth piece is finished.

The time needed for this exchange of mouth pieces is very short, being about 3 seconds, and so, even if the extrusion of raw rubber is continued during this period, there is no inconvenience because, in the short time, the amount of raw rubber extruded is small and the rubber is constrained to a certain extent by the back plate 32.

From the foregoing it can be seen that replacement of a mouth piece is carried out completely automatically. Extrusion continues even during replacement of the mouth piece, the material to be extruded is not cut and therefore, manual intervention, such as guiding of a tip portion produced by cutting can be avoided and a great reduction in labour costs can be achieved,

In addition, since the material being extruded is formed as a continuous length, the time after exchange of the mouth piece before a predetermined shape of rubber sheet can be produced stably is short, and hence the amount of wasted extrudate can be minimised. In other words, owing to replacement of mouth pieces being achieved in a short period of time with operation of the extruder being continuous, the operating efficiency of the extruder can be improved.

While the above-described equipment was designed so that mouth pieces are accommodated in predetermined slots of mouth piece stockers 12 and the mouth pieces can be used selectively, there will now be described equipment comprising a different mouth piece exchanger which operates so that the sequence in which mouth pieces are used is predetermined and the mouth pieces are successively exchanged according to the predetermined sequence.

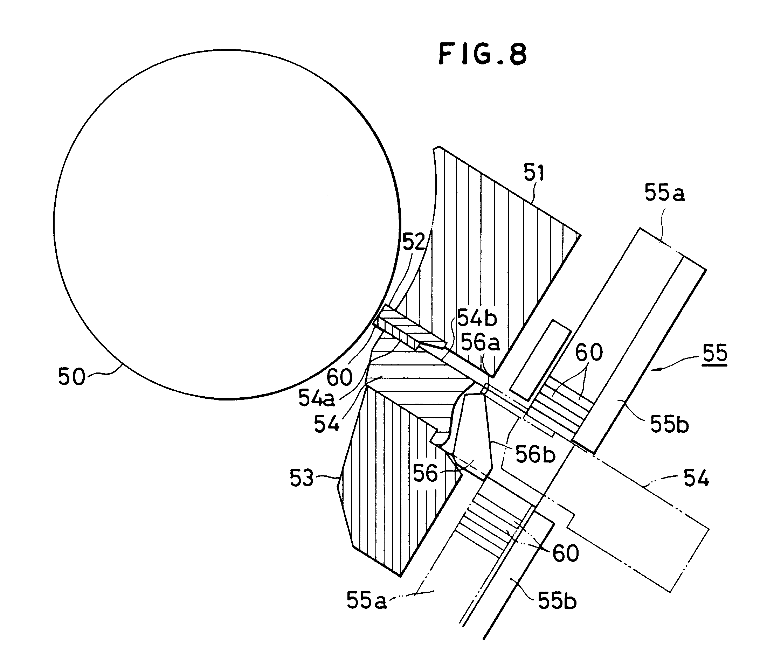

In this embodiment, as generally shown in Figure 8, an extrusion roller 50 shown positioned on the left side is associated with a member positioned shown on its right side. This member is a chamber block 51, and extending obliquely under the chamber block 51 relatively close to the extrusion roller 50 are positioned taper blocks 53.

Onto the front surface of the chamber block 51 and directed obliquely downwards is fixedly secured a back plate 52 and a mouth piece holder 54 shaped to allow it to be inserted and fit in the space between the back plate 52 and the taper blocks 53. The mouth piece holder 54 is movable in a direction inclined by about 45 degrees.

Positioned obliquely under the chamber block 51 and the taper blocks 53 is provided a mouth piece stocker 55 extending in the direction at right angles to the direction of movement of the mouth piece holder 54.

The above-mentioned mouth piece stocker 55 consists of left and right side plates 55a and a bottom plate 55b, and a part of the bottom plate 55b is formed as an opening through which the mouth piece holder 54 can pass.

In addition, between the taper blocks 53 and the mouth piece stocker 55 are positioned arm members 56 which are fixedly secured to a frame (not shown) so as to embrace the mouth piece holder 54 from opposite sides.

The above-mentioned arm members 56 are held close to the mouth piece holder 54, the top ends 56a of the arm members 56 extending up to the vicinity of the rear side surface of the mouth piece 54; the rear side surfaces 56b of the arm members 56 incline steeply from the top ends 56a and reach the vicinity of the mouth piece stocker 55.

At the top end of the mouth piece holder 54 is provided a cut-away region 54a, in which a mouth piece 60 can be fitted and supported by the wall of region 54a, and since the depth of this region is smaller than the thickness of a mouth piece 60, when such is present, it will project from the rear side surface of the mouth piece holder 54, and the opposite ends of the mouth piece 60 will also project a little to the left and to the right from the mouth piece holder 54.

When extrusion work is being carried out, then, as shown by solid lines in Figure 8, a mouth piece 60 supported by a mouth piece holder 54 that is fitted in the space between the chamber block 51 and the taper blocks 53 is gripped between the back plate 52 and the tip portion of the mouth piece holder 54. Under such conditions, a rear surface 54b of the mouth piece holder 54 forms one bottom surface of the mouth piece holder 55, and the mouth pieces 60 are stacked on this rear surface 54b along a bottom plate 55b. When replacement of the mouth piece is to be carried out, the mouth piece holder 54 is made to slide obliquely downwards by driving a cylinder or the like acting on it (not shown).

A mechanism for preventing a mouth piece from being withdrawn, from its separating position, which mechanism is similar to that comprising protruding portions 36 in the above-described first preferred embodiment, is provided, although it is not shown in Figure 8 in the interests of clarity.

When the mouth piece holder 54 has been lowered to a certain position, the bottom of the mouth piece portion projecting upwards from the rear surface 54b of the mouth piece 54 strikes against the top end of the mouth piece at the lowest level in the mouth piece stocker 55, and so, only the mouth piece holder 54 is lowered further with the mouth piece 60 being left at that position.

The mouth piece 60 is now in a condition where the upper portions of its left and right edges are supported by the top end portions 56a of the arm members 56 and the lower portion of the mouth piece 60 is held in the region 54a of the mouth piece holder 54. This condition is shown by double-dot chain lines in Figure 8.

When the mouth piece holder 54 is further lowered from the above-mentioned condition, the lower portion of the mouth piece 60 is disengaged from the region 54a of the mouth piece holder 54, swings downwards to take up position along the rear surfaces of the arm members 56 and drops therealong.

The dropped mouth pieces 60 are stacked in the lower portion of the mouth piece stocker.

At the same time, when the region of the mouth piece holder 54 has reached the bottom plate 55b of the mouth piece stocker 55, the mouth pieces stacked in the upper half portion of the mouth piece stocker 55 will fall a little under gravity, and the mouth piece 60 at the lowest level will be newly fitted in region 54a of the mouth piece holder 54.

Accordingly, when the mouth piece holder 54 is raised again, the new mouth piece 60 rises supported by the mouth piece holder 54, and when it has been raised to a predetermined position, it is gripped between the back plate 52 and the top portion of the mouth piece holder 54 and when this is reliably located and the replacement of the mouth piece is completed.

With the embodiment of Figure 8, since the mouth pieces can be exchanged successively by merely moving the mouth piece holder 54 in the obliquely upward and downward directions, the time necessitated for replacment of the mouth pieces can be shortened further, the mechanism can be simplified, hence maintenance and control are easy and operating costs can be reduced.

However, this modified operation is available only when it is acceptable for the sequence of exchange of the mouth pieces to be predetermined,

As will be apparent from the detailed description above, the present invention allows the requirement for the operators to be reduced in a rotary roller extruder, as the exchange of mouth pieces is completely automated.

Furthermore, owing to the fact that even during replacement of mouth pieces, the extrusion device can be operated continuously and cutting of the material to be extruded is not effected, the step of guiding of the tip of the material to be extruded can be omitted. The time needed before extruded products of desired precision can be stably formed after exchange of a mouth piece, is shortened, and because the time required for exchange of the mouth piece is short, the amount of material extruded wastefully is extremely small, and overall extremely high working efficiency is realised.

## Claims

1. A rotary roll extruder comprising mouth piece moving means for moving a mouth piece (5; 60) along a path in radial direction of an extrusion roller (2; 50) to make the mouth piece (5; 60) move towards and away from the circumferential surface of said extrusion roller (2; 50), and a mouth piece positioning means for placing said mouth piece, (5; 60) in a position where said mouth piece (5; 60) is closely adjacent the circumferential surface of said extrusion roller (2;50) to define an extrusion gap, characterised by the additional provision of mouth piece exchanging means (4; 56) for performing exchange of mouth pieces (5; 60) at a position where said mouth piece is held apart from said extrusion roller (2; 50) without requiring cutting of the material being extruded, said mouth piece exchanging means (4; 56) being positioned on said path, and of mouth piece stocking means (10, 11, 12; 55) for preliminarily stocking various kinds of mouth pieces (5; 60) for movement along said path.

2. A rotary roll extruder as claimed in claim 1, wherein said mouth piece moving means comprises a mouth piece holder (28; 54) displaceable along said path and said mouth piece stocking means (10, 11, 12; 55) extends substantially at right angles to said mouth piece holder (28; 54) at a position remote from said extrusion roller (2; 50) for supporting therein said plurality of mouth pieces (5; 60) so as to be extractable individually towards said extrusion roller (2; 50), said path on which said mouth piece holder (28; 54) travels passing through said mouth piece stocking means (10, 11, 12; 55), the mouth piece holder (28; 54) having an engaging portion (34, 36) engaging a selected mouth piece (5; 60) when the mouth piece holder (28; 54) passes through said mouth piece stocking means (10, 11, 12; 55) in a direction towards said extrusion roller (2; 50) to replace a mouth piece (5; 60) previously removed therefrom with a newly selected mouth piece (5; 60).

3. A rotary roll extruder as claimed in claim 2, wherein said mouth piece stocking means (10, 11, 12; 55) has a bridged pair of side plates (10; 55a) space apert from one another and said mouth piece holder (28; 54) passes through the space existing between said side plates (10; 55a).

4. A rotary roll extruder as claimed in claim 3, wherein said mouth piece stocking means comprises mouth piece stockers (12) which undergo sliding movement in a direction perpendicular to said path, and said pair of side plates (10) is provided with a plurality of sets of slots each for supporting a mouth piece (5), the slots being aligned with each other and spaced at predetermined intervals.

5. A rotary roll extruder as claimed in claim 2 or 3, wherein both said path and said mouth piece stocking means (55) are inclined to the horizontal; and a plurality of mouth pieces (60) is accommodated in and supported on said mouth piece stocking means (55) by being stacked on one another.

6. A rotary roll extruder as claimed in claim 2, wherein a chamber defining block (3; 51) and taper block means (29; 53) providing an inclined surface to an opposed surface of the chamber defining block (3; 51) are disposed adjacent the circumferential surface of said extrusion roller (2; 50) and said mouth piece holder (28; 54) positions a said mouth piece (5; 60) adjacent the circumferential surface of said extrusion roller to be gripped between said respective blocks (3 and 29; 51 and 53).

## Patentansprüche

1. Strangpreßeinrichtung mit rotierender Walze mit einer Mundstück-Bewegungseinrichtung zum Bewegen eines Mundstückes (5; 60) entlang einer Bahn radial zu einer Walze (2; 50), um das Mundstück (5; 60) hin zur bzw. weg von der Oberfläche der Walze (2; 50) zu bewegen und eine Mundstück-Verstelleinrichtung zum Positionieren des Mundstückes (5; 60) in eine Lage sehr nahe der Oberfläche der Walze (2; 50) zum Ausbilden eines Extrusionsspaltes, **dadurch gekennzeichnet,** daß zusätzlich eine Mundstück-Auswechseleinrichtung (4; 56) zum Austauschen von Mundstücken (5; 60) in einer Position, in der das Mundstück von der Walze (2; 50) entfernt gehalten ist, so daß kein Abschneiden des extrudierten Materials erforderlich ist, wobei die Mundstück-Auswechseleinrichtung (4; 56) auf der Bahn angeordnet ist, und eine Mundstück-Lagereinrichtung (10, 11, 12; 55) für vorläufige Lagerung verschiedener Mundstücke (5; 60) zum Bewegen entlang der Bahn vorgesehen sind.

2. Strangpreßeinrichtung mit rotierender Walze, **dadurch gekennzeichnet,** daß die Mundstück-Bewegungseinrichtung einen entlang der Bahn versetzbaren Mundstückhalter (28; 54) aufweist, und die Mundstück-Lagereinrichtung (10, 11, 12; 55) sich im wesentlichen in rechten Winkeln zu dem Mundstückhalter (28; 54) in einer von der Walze (2; 50) entfernten Position erstreckt, um darin die Anzahl von Mundstücken (5; 60) zu lagern, so daß sie einzeln auf die Walze (2; 50) hin ausziehbar sind, wobei die Bahn, auf der der Mundstückhalter (28; 54) entlangfährt, durch die Mundstück-Lagereinrichtung (10, 11, 12; 55) führt, und der Mundstückhalter (28; 54) ein Rastmittel (34, 36) zum Ankuppeln eines ausgewählten Mundstückes (5; 60) während der Mundstückhalter (28; 54) die Mundstück-Lagereinrichtung (10, 11, 12; 55) in Richtung auf die Walze (2; 50) passiert, aufweist, um ein vorher hiervon entferntes Mundstück (5; 60) gegen ein neu ausgewähltes Mundstück (5; 60) zu ersetzen.

3. Strangpreßeinrichtung mit rotierender Walze nach Anspruch 2, **dadurch gekennzeichnet,** daß die Mundstück-Lagereinrichtung (10, 11, 12; 55) ein Paar miteinander verbundene, voneinander beabstandete Seitenplatten (10; 55a) aufweist und der Mundstückhalter (28; 54) durch den zwischen den Seitenplatten (10; 55a) vorhandenen Raum fährt.

4. Strangpreßeinrichtung mit rotierender Walze nach Anspruch 3, **dadurch gekennzeichnet,** daß die Mundstück-Lagereinrichtung Lager (12) für die Mundstücke aufweist, die einer Verschiebebewegung senkrecht zu der Bahn unterzogen werden, und das Paar von Seitenplatten (10) mit einer Anzahl von Sätzen von Schlitzen jeweils zum Lagern eines Mundstückes (5) versehen ist, wobei die Schlitze miteinander fluchten und in vorgegebenen Abständen angeordnet sind.

5. Strangpreßeinrichtung mit rotierender Walze nach Anspruch 2 oder 3, **dadurch gekennzeichnet,** daß sowohl die Bahn als auch die Mundstück-Lagereinrichtung (55) gegenüber der Horizontalen geneigt sind und eine Anzahl von Mundstücken (60) aufgenommen und in der Mundstück-Lagereinrichtung (55) gelagert ist, indem sie aufeinander gestapelt sind.

6. Strangpreßeinrichtung mit rotierender Walze nach Anspruch 2, **dadurch gekennzeichnet,** daß ein eine Kammer bildender Block (3; 51) und Keilblöcke (29; 53) mit abgeschrägter Oberfläche zu einer gegenüberliegenden Oberfläche des Blockes (3; 51) nahe der Oberfläche der Walze (2; 50) angeordnet sind und der Mundstückhalter (28; 54) ein Mundstück (5; 60) nahe der Oberfläche der Walze positioniert, das zwischen den genannten Blöcken (3 und 29; 51 und 53) einklemmbar ist.

## Revendications

1. Extrudeuse à rouleau rotatif comprenant un moyen de déplacement de pièce d'embouchure destiné à déplacer une pièce d'embouchure (5 ; 60) le long d'un trajet dans la direction radiale d'un rouleau d'extrusion (2 ; 50) de manière à ce que la pièce d'embouchure (5 ; 60) s'approche et s'écarte de la surface circonférentielle dudit rouleau d'extrusion (2 ; 50), et un moyen de positionnement de pièce d'embouchure destiné à placer ladite pièce d'embouchure (5 ; 60) dans une position où ladite pièce d'embouchure (5 ; 60) est étroitement adjacente à la surface circonférentielle dudit rouleau d'extrusion (2, 50) de manière à définir un espace d'extrusion, caractérisée en ce qu'il est prévu en outre un moyen d'échange (4 ; 56) de pièce d'embouchure destiné à effectuer un échange de pièces d'embouchure (5 ; 60) à un endroit où la pièce d'embouchure est maintenue éloignée dudit rouleau d'extrusion (2 ; 50) sans qu'il soit nécessaire de couper la matière en cours d'extrusion, ledit moyen d'échange (4 ; 56) de pièce d'embouchure étant placé sur ledit trajet, et un moyen de stockage (10, 11, 12 ; 55) de pièce d'embouchure destiné à stocker au préalable divers types de pièces d'embouchure (5 ; 60), en vue d'un déplacement le long dudit trajet.

2. Extrudeuse à rouleau rotatif selon la revendication 1, dans laquelle ledit moyen de déplacement de pièce d'embouchure comprend un support (28 ; 54) de pièce d'embouchure pouvant se déplacer le long dudit trajet et ledit moyen de stockage (10, 11, 12 ; 55) de pièce d'embouchure s'étend sensiblement à angle droit par rapport audit support (28 ; 54) de pièce d'embouchure à un endroit espacé dudit rouleau d'extrusion (2 ; 50) pour y supporter ladite pluralité de pièces d'embouchure (5 ; 60) de manière à ce qu'elles puissent être retirées individuellement vers ledit rouleau d'extrusion (2 ; 50), ledit trajet sur lequel se déplace ledit support (28 ; 54) de pièce d'embouchure passant à travers ledit moyen de stockage (10, 11, 12 ; 55) de pièce d'embouchure, le support (28 ; 54) de pièce d'embouchure ayant une partie de retenue (34, 36) venant en contact avec une pièce d'embouchure sélectionnée (5; 60) lorsque le support (28 ; 54) de pièce d'embouchure passe à travers ledit moyen de stockage (10, 11, 12; 55) de pièce d'embouchure dans une direction allant vers ledit rouleau d'extrusion (2 ; 50) de manière à remplacer une pièce d'embouchure (5 ; 60) qui en a été précédemment retirée par une pièce d'embouchure (5 ; 60) nouvellement sélectionnée.

3. Extrudeuse à rouleau rotatif selon la revendication 2, dans laquelle ledit moyen de stockage (10, 11, 12 ; 55) de pièce d'embouchure comporte une paire réunie de plaques latérales (10 ; 55a) espacées l'une de l'autre et ledit support (28 ; 54) de pièce d'embouchure passe à travers l'espace existant entre lesdites plaques latérales (10 ; 55a).

4. Extrudeuse à rouleau rotatif selon la revendication 3, dans laquelle ledit moyen de stockage de pièce d'embouchure comprend des éléments de stockage (12) de pièce d'embouchure qui effectuent un mouvement de glissement dans une direction perpendiculaire audit trajet, et ladite paire de plaques latérales (10) sont munies d'une pluralité d'ensembles de fentes, chacune destinée à supporter une pièce d'embouchure (5), les fentes étant alignées les unes avec les autres et espacées à intervalles prédéterminés.

5. Extrudeuse à rouleau rotatif selon la revendication 2 ou 3, dans laquelle à la fois ledit trajet et ledit moyen (55) de stockage de pièce d'embouchure sont inclinés par rapport à l'horizontale ; et une pluralité de pièces d'embouchure (60) sont logées dans ledit moyen de stockage (55) de pièce d'embouchure et supportées par celui-ci en étant empilées les unes sur les autres.

6. Extrudeuse à rouleau rotatif selon la revendication 2, dans laquelle un bloc formant chambre (3 ; 51) et un bloc conique (29 ; 53) formant une surface inclinée par rapport à une surface opposée du bloc formant chambre (3 ; 51) sont disposés de façon adjacente à la surface circonférentielle dudit rouleau d'extrusion (2 ; 50) et ledit support (28 ; 54) de pièce d'embouchure place l'une desdites pièces d'embouchure (5 ; 60) de façon adjacente à la surface circonférentielle dudit rouleau d'extrusion pour qu'elle soit serrée entre lesdits blocs respectifs (3 et 29 ; 51 et 53).

# FIG.1

# FIG.2

EP 0 344 890 B1

FIG.3

# FIG.4

# FIG.5

FIG.6

# F I G . 7

# FIG.8

EP 0 344 890 B1

# FIG.9